# EUROPEAN PATENT SPECIFICATION

(11) **EP 4 455 418 B1**
(45) Date of publication and mention of the grant of the patent: **08.10.2025**
(21) Application number: 24163379.1
(22) Date of filing: 13.03.2024
(51) Int. Cl.: E04B 1/76, F16B 5/06, E06B 9/04, F16B 5/02, F16B 13/14

(54) **IMPROVED FIXING SYSTEM OF LIGHT LOADS ON INSULATING CLADDING OF EXTERIOR WALLS OF BUILDINGS**
VERBESSERTES BEFESTIGUNGSSYSTEM FÜR LEICHTE LASTEN AN ISOLIERENDER VERKLEIDUNG VON AUSSENWÄNDEN VON GEBÄUDEN
SYSTÈME DE FIXATION AMELIORÉ DE CHARGES LÉGÈRES SUR ISOLATION EXTÉRIEURE DE MURS EXTÉRIEURS DE BATIMENT

(30) Priority: 28.04.2023 IT 202300008364
(43) Date of publication of application: 30.10.2024
(73) Proprietor: Esinplast S.r.L., 60030 Monsano (AN) (IT)
(72) Inventor: CIRILLI, Alessandro, 60035 Jesi (AN) (IT)
(74) Representative: Baldi, Claudio

(56) References cited:
- EP-A1- 3 088 623
- US-A1- 2013 167 456

## Description

The present patent application for industrial invention relates to an improved fixing system of light loads on the insulating cladding of exterior walls of buildings.

In order to provide a description of the prior art of the present invention, reference is made to the Italian patent for industrial invention No. 1427639 filed on 03/13/2015 with application No. AN2015A45 and granted on 03/17/2017, which relates to a fixing system of light loads on the insulating cladding of the exterior walls of buildings. Document EP3088623A1 discloses all the features of the preamble of claim 1.

The system described in the aforementioned antecedent was conceived to be used during the construction of the insulating cladding that is normally realized on the exterior walls of a building with panels of polyurethane foam or other synthetic materials.

As it is well known, a problem experienced with such an exterior cladding made with the aforementioned panels of insulating materials is represented by its inability to support even light loads, such as that of the shutters that are to be mounted on the façade of the building.

More precisely, it can be said that, in spite of being reinforced with a wire mesh and plastered, a cladding made of insulating panels is unable to offer a reliable and resistant grip to the anchoring screws of the hinges of the aforementioned shutters.

In order to overcome such a problem, a special apparatus has been devised that is suitable for being firmly fixed to the masonry surface supporting the cladding, and is capable of providing anchorage points on the cladding for the fixing of heavy loads, such as shutters, by means of screws.

In such a context, the cladding simply needs to be drilled in order to insert the screws used for fixing the aforementioned loads, without having to support any weight, because the task of supporting the weight of such loads is entirely entrusted to the masonry wall.

The 2015 priority discloses a fixing system of loads on the front of insulating walls, which is inspired by the aforementioned general logic.

Such a system provides for using two basic components that are preferably made by molding plastic materials and are suitable for cooperating according to the needs and the characteristics of the insulating cladding mounted on the front of a masonry wall of a building.

The first one of said components consists of a substantially parallelepiped box base, provided with a rectangular seat accessible from the front and enclosed by a thin back wall.

The second one of said components consists of a substantially parallelepiped support with rectangular base which is suitable for being exactly engaged and fixed in said base, in such a way to be disposed in orthogonal position with respect to the base.

The base is suitable for being screwed against the masonry wall of the building in horizontal position, whereas the support is suitable for being exactly engaged into the seat of said base.

In such an arrangement, said support projects on the front of the base and therefore on the front of the masonry wall whereon said base is installed.

In view of the above, the front end of said support is flush with the front surface of the insulating cladding mounted on the masonry wall, although the presence of said support is concealed by the layer of plaster applied on the insulating cladding.

Normally, four bases provided with the support that projects on the front are attached, two by two, to the sides of each of the windows made on the masonry wall, for the purpose of installing the two shutters with rotating leaf.

Otherwise, it can be said that, in order to mount a shutter in correspondence of the window of the building, four holes, i.e. two on each side of the window, are drilled in order to cross the supports supported by the bases on the front of the masonry wall.

The four holes can be used for the installation of as many perforated sleeves, which are secured to the supports thanks to the action of a resin that is previously injected into the holes.

In turn, the sleeves are suitable for accommodating the threaded stems of the hinges of the shutters, the weight of which is ultimately discharged onto the masonry wall of the building with the interposition of four specimens of the "base-support" assembly as described above.

Within the system described in the aforementioned priority of 2015, special interest should be paid to the aforementioned support suitable for cooperating with a base for fixing to the masonry wall.

Said parallelepiped support comprises a head provided with a lightening alveolar structure, which is suitable for facing in the direction of the exterior of the building; in such a way, said head effectively represents the gripping point of a specimen of said perforated sleeve.

Posteriorly to said alveolar head, the support is provided with two axial tabs suitable for being engaged and firmly screwed inside the seat provided in the base for fixing to the masonry wall.

Starting from similar evidences, it should be pointed out that the insulating cladding of a building may have a different thickness, and therefore the length (i.e. the projection relative to the masonry wall) of the support comprised in the system described in the 2015 priority must be from time to time substantially equal to the thickness of the insulating cladding.

For such a reason, the support must be made in different lengths according to the different standard thickness of the aforementioned insulating panels, so that the installer of such panels can purchase the supports of appropriate size for the thickness of the panels that are about to be mounted on the front of a masonry wall.

Alternatively, the supports may have a length corresponding to the maximum possible thickness of the insulating panels that are available on the market, and the length of said supports can be reduced by partially cutting the rear wings directly on the construction site whenever they need to be adjusted to the lower thickness of the panels chosen for installation.

Based on these premises, the purpose of the present invention is to improve the aforementioned fixing system by introducing an innovative coupling mode between the base and the support which allows for varying the projection of the support relative to the base according to the thickness envisaged from time to time for the insulating panels to be supported on the front of a masonry wall.

It is easy to understand how the possibility of adjusting the projection of each of the aforementioned supports relative to the masonry wall eliminates the problems that are typical of the 2015 version of the fixing system in question.

More precisely, it will be no longer necessary to produce multiple versions of the supports with different length or to cut each support to size in order to reduce its length according to the thickness of the insulating panels.

The solution idea adopted to pursue such a purpose is such that the aforementioned base suitable for being screwed to the masonry wall is no longer provided with the seat of the 2015 version, but with a guide in which the support can slide freely, before being permanently fixed, in order to adjust from time to time its projection relative to the masonry wall according to the thickness of the insulating panels.

As it will be better elucidated below, it must be additionally pointed out that such a new configuration of the fixing system in question guarantees a more stable and a more resistant fixing between each support and its base compared to the 2015 version, that is to say a fixing that is capable of withstanding the weight of the shutters screwed to four specimens of the aforementioned support.

Such a greater reliability of the fixing between the base and the support comes from the fact that in the 2015 version each of the supports is screwed to the base by means of axial screws inserted through the back wall of the aforementioned seat provided in the base; instead, in the version that is the subject of the present patent application, each of the supports is screwed to the base by means of screws inserted through its thickness.

Otherwise said, according to the prior art, the screws used to fix the support to the base are inserted in parallel position relative to the screws used to fix the base against the masonry wall; conversely, according to the new solution of the invention, the screws used to fix the support to the base are inserted in orthogonal position relative to the screws used to fix the base against the masonry wall.

Such a solution greatly reduces, if not eliminates, the risk that such a support may bend downward under the weight of the shutter with respect to the base fixed to the masonry wall.

The aforementioned purpose of the present invention is achieved with the features listed in the attached independent claim 1.

Advantageous embodiments of the new fixing system appear from the dependent claims.

For explanatory clarity, the description of the invention continues with reference to the attached drawings, which are for illustrative and non-limiting purposes only, wherein:
- Figs. 1A and 1B respectively show the base and support provided in the new fixing system, before being assembled;
- Fig. 1C is a diagrammatic sectional drawing that shows the way in which said support is fixed in its operating position on the base, in correspondence of the window of a building;
- Fig. 2 shows the two aforementioned components assembled in operating position;
- Fig. 3 is the same as the previous figure, except for it shows the two aforementioned components partially sectioned;
- Fig 4 shows the two aforementioned components assembled in operating position in correspondence with a window of the masonry wall;
- Fig. 5 shows four specimens of the aforementioned "base-support" assembly mounted on the two sides of a window;
- Fig. 6 shows the fixing method of a specimen of the aforementioned "base-support"" assembly in correspondence of a window made on a masonry wall that is not yet cladded with insulating panels;
- Fig. 7 shows a section of the masonry wall cladded with insulating panels.

As mentioned above, the fixing system according to the invention comprises two cooperating components, which are both provided with a monolithic molded structure made of plastic materials, the first of which consists of a base (1) screwed onto the front of a masonry wall (PM), and the second of which consists of a support (2) projecting perpendicularly onto the front of the base (1), the function of which is to be flush with the front surface of a layer of cladding panels (P) mounted on said masonry wall (PM) in order to preferably serve as fixing and supporting points for a pair of shutters mounted in correspondence with a window (FN) made on the masonry wall (PM).

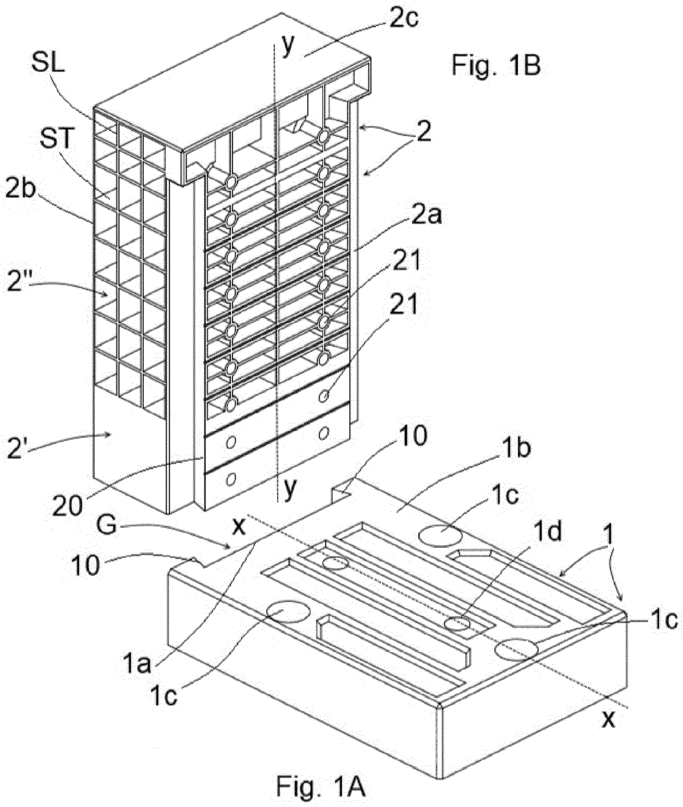

With reference to Fig. 1A, more precisely, the base (1) has a parallelepiped box structure with longitudinal axis x-x, and is provided at the first one (1a) of its transverse edges with a dovetail notch (10) defining a substantially C-shaped through guide (G) extending in orthogonal direction relative to said axis x-x.

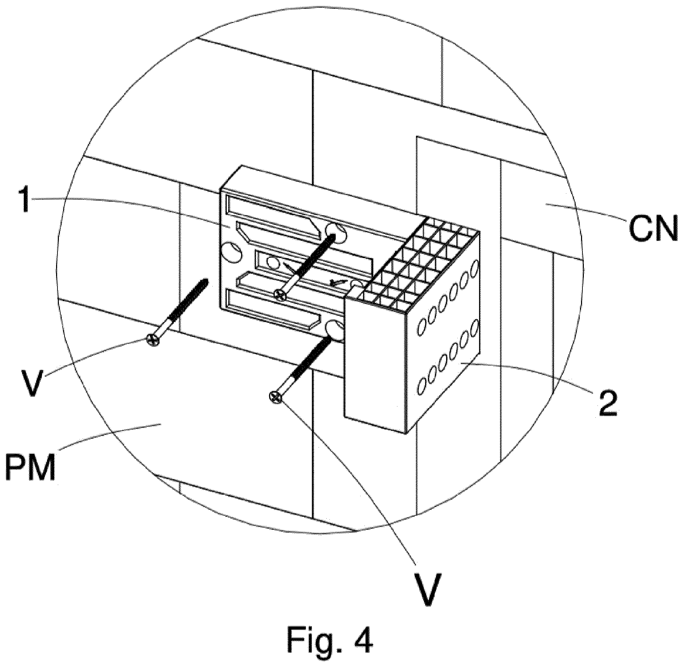

The front surface (1b) of said base (1) is provided in peripheral positions with three first holes (1c) crossing the entire thickness of the base (1), wherein the screws (V) suitable for fixing said base (1) on a masonry wall (PM) are inserted, as shown in Fig. 4.

Thus, said first holes (1c) have an orthogonal direction with respect to said longitudinal axis x-x of the base (1).

Two second holes (1d), which are preferably parallel to said first holes (1c), are provided in the center of the front surface (1b) to inject a polyurethane foam suitable for internally filling the base (1), after screwing the base (1) to the masonry wall (PM).

Such a filling with the foam prevents the occurrence of moisture, as well as the proliferation of microorganisms and the formation of discontinuity points between the base (1) and the surface of the masonry wall (PM).

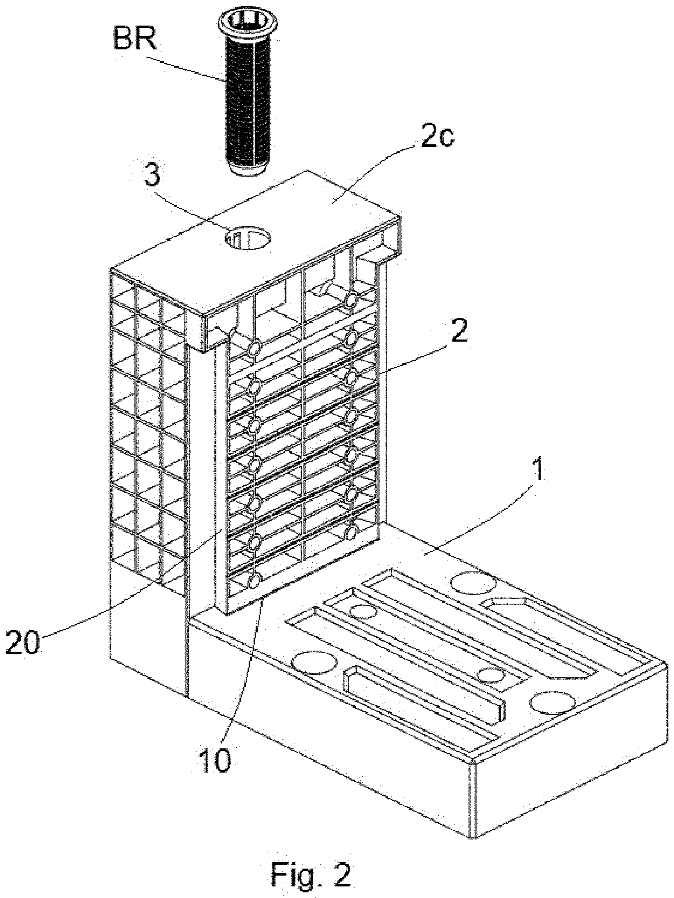

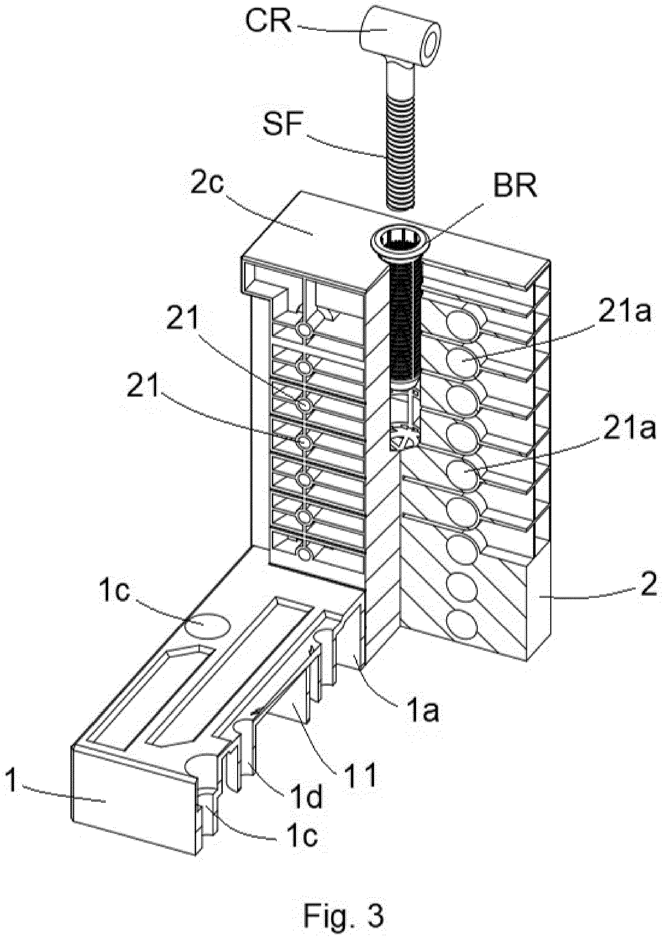

Moreover, as shown in Figs. 2 and 3, the base (1) is internally provided with a plurality of stiffening ribs (11).

With reference to Fig. 1B, the second of the components of the present fixing system consists of a support (2), which is equally provided with a parallelepiped structure with a longitudinal axis y-y, wherein said support (2) comprises a front surface (2a) and a rear surface (2b).

Such a support (2) comprises a first section (2') of shorter length with continuous walls, and a second section (2") of significantly greater length with an alveolar structure defined by the intersections of longitudinal partitions (SL) and transverse partitions (ST).

A flat head (2c) is provided at the top of said second section (2"), whereas the front surface (2a) is centrally provided with a longitudinal projection (20), having a dovetail section, which is capable of being exactly and slidingly fitted inside said guide (G) of the base (1).

Said support (2) is crossed at different heights by multiple pairs of cylindrical holes (21) disposed side by side and extending from the rear surface (2b) to the front surface (2a) of said support (2) in orthogonal position to said longitudinal axis y-y of the latter.

As shown in the appended figures, each of the holes (21) provided in the second section (2") of the support (2) is preferably obtained at an intersection point between the longitudinal partitions (SL) and the transverse partitions (ST).

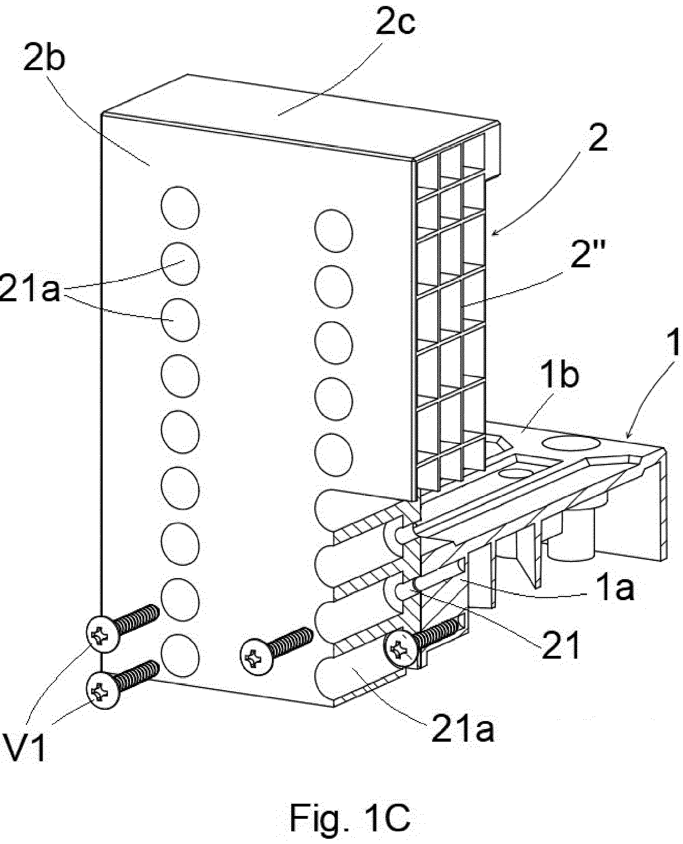

With reference to Fig. 1C, Fig. 2, and Fig. 3, it is reiterated that the cooperation between the two components (1, 2) requires that the central projection (20) of the support (2) is exactly engaged into the guide (G) of the base (1), whereas the subsequent stable fixing of said components (1, 2) is achieved by installing four screws (V1) which are inserted through two pairs of the aforementioned holes (21) of the support (2) and are engaged into said first transverse edge (1a) of the base (1).

To this end, each of the holes (21) of the support (2) is provided at the rear surface (2b) of the support (2) with an enlarged mouth (21a) suitable for accommodating the head of the screw (V1), when the screw (V1) is installed as described above to act as stop means of the support (2) relative to the base (1).

Considering that the support (2) can slide inside the guide (G) of the base (1), and also considering that said support is provided with a plurality of holes (21) at different heights, it is understood how the installer of the fixing system according to the present invention can choose the position of the support (2) with respect to the guide (G) of the base (1) as desired.

In this way, the installer can determine the size of the projection of the support (2) relative to the base (1) from time to time, so as to adjust to the thickness of the insulating panels (P) that are to be mounted on the front of the masonry wall (PM).

The possibility to adjust the projection of the support (2) with respect to the base (1) allows to overcome the aforementioned limitation that is typical of the prior art, meaning that it eliminates the need to produce different versions of the support (2) according to the thickness of the insulating panels, as well as the need to cut a standard version of such a support to size each time.

As already mentioned, due to the fact that the screws (V1) used to fix the supports (2) to the bases (1) operate in orthogonal direction relative to the screws (V) used to fix the bases (1) against the masonry wall (PM), such supports (2) can have a greater resistance against any possible bending in the direction of the ground caused by the weight of the shutters that are fixed on them.

It must be pointed out that, in the preferred embodiment of the invention shown in the appended figures, the rear surface (2b) of the support (2) has a continuous surface for its entire height, without the alveolar structure that is instead provided on the front surface (2a) and on the sides of the support (2).

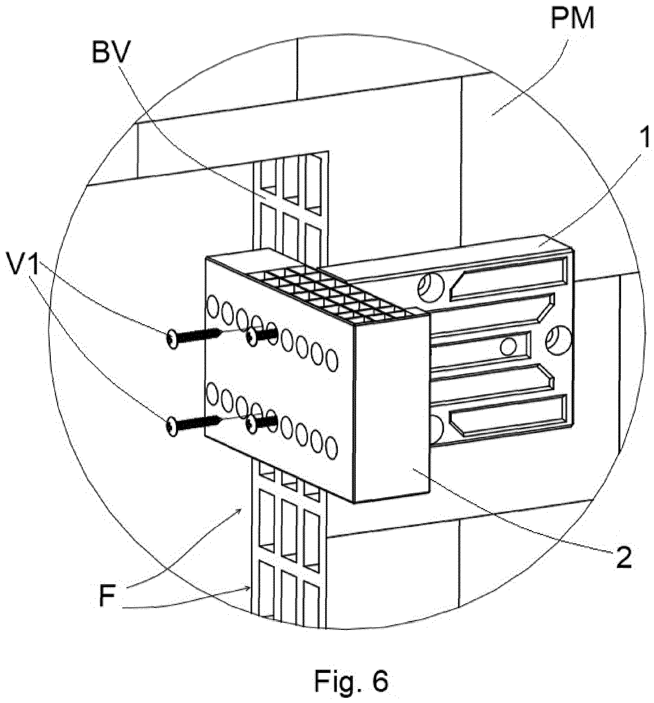

For a better understanding of the operation of the system according to the invention, reference is made to Fig. 6, which shows the typical installation mode of a "base (1) - support (2)" assembly at one of the vertical edges (BV) of a window (FN).

In these terms, it can be noted that the base (1) is screwed to the masonry wall (PM) in such a way that the guide (G) protrudes on the inside of the vertical edge (BV) of the window (FN).

Such an arrangement ensures that, whenever it is necessary, the support (2) can reduce its projection on the front of the masonry wall (PM) by moving backwards with respect to the base (1) and using the space circumscribed by the window (FN), as shown in Fig. 6.

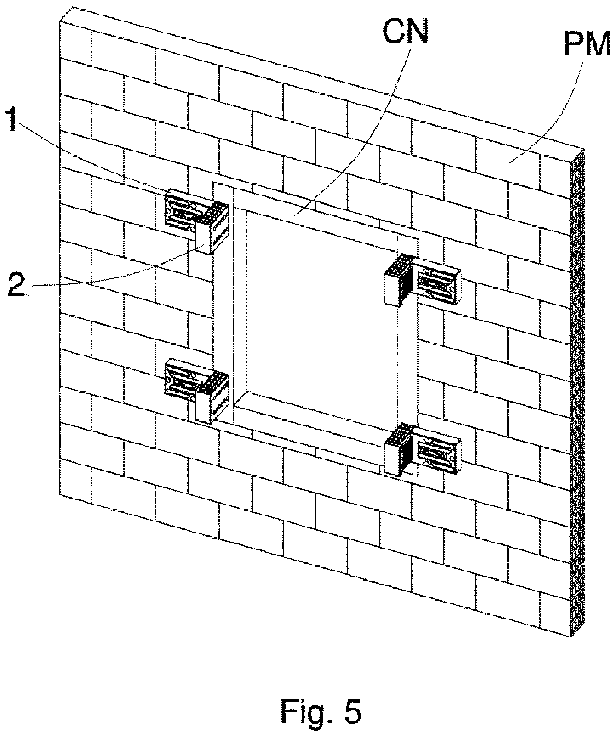

Fig. 5 shows four specimens of the "base (1) - support (2)" assembly fixed on the masonry wall (PM) on either side of the window (FN) for the mounting a pair of shutters.

A shown in Fig. 5, the edges of the window (FN) are finished with a frame (CN) which is preferably made of insulating panels.

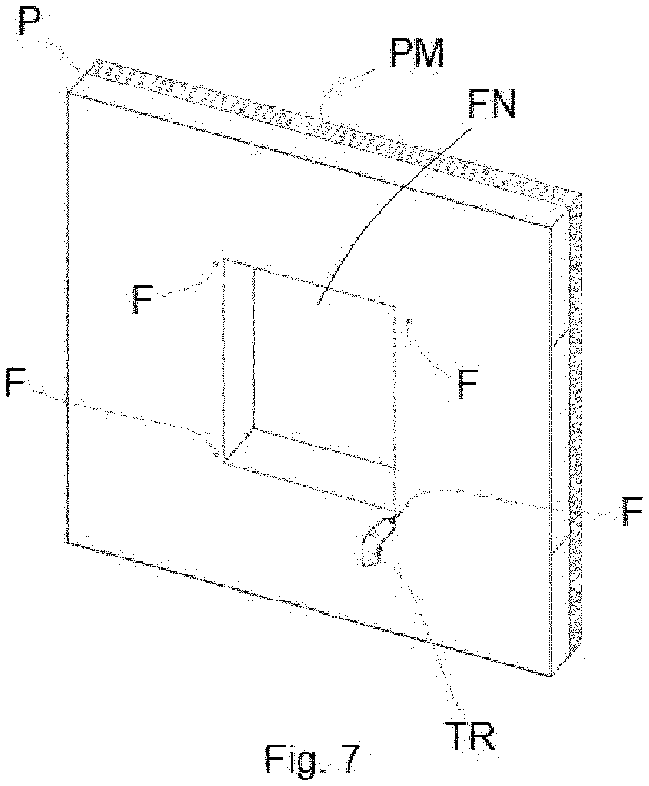

The insulating panels (P) are then mounted on the front of said masonry wall (PM), leaving the opening of the window (FN) free, as shown in Fig. 7.

As already mentioned, the installation of the insulating panels (P) is performed by disposing the panels (P) over the four bases (1), which are no longer visible, flush with the heads (2c) of the supports (2) at the front surface.

The last step of the process consists in the preparation of a layer of plaster to cover both the front surface of the panels (P) and the heads (2c) of the four supports (2), concealing them from the view.

As shown in Fig. 7, the installer must finally drill four through holes (F) on the plastered surface, at the four heads (2c) of the supports (2).

In such a way, on each of these supports (2), the bit of the drill (TR) makes an axial hole (3) that is developed at its second section (2"), as diagrammatically shown in Fig. 2.

Such a drilling operation allows the installer to use the holes (3) obtained in the four specimens of the support (2) to accommodate four perforated sleeves (BR).

Said sleeves (BR) are preferably provided with a corrugated surface that ensures a more effective grip of each sleeve (BR) on the resin, once it has set inside the support (2).

The final operations are the injection of the chemical anchoring agent into the hole of the sleeve (BR) and the insertion of the hinge (CR) for shutters inside each of the sleeves (BR) that are firmly engaged in the support (2), as shown in Fig. 3.

Evidently, in such a condition, the hinges (CR) of the shutters remain on the outside of the cladding panels (P), on either side of the window (FN), so as to advantageously support the shutters.

Finally, it should be noted that the solution idea underlying the present invention can also be implemented with alternative, albeit conceptually equivalent, construction solutions.

By way of example, the guide (G) provided in the first transverse edge (1a) of the base (1) may be made in the form of a collar with rectangular shape (i.e. a sort of sleeve), it being naturally envisaged that the support (2) is provided with a suitable cross-section in order to be exactly and slidingly fitted inside such a sleeve, and is then selectively fixed by means of screws.

## Claims

1. A fixing system of light loads on insulating panels mounted on the exterior walls of buildings, comprising:
- a base (1) molded from plastic materials and provided with a parallelepiped box structure having a longitudinal axis x-x, and suitable for being fixed to the masonry wall (PM) of a building;
- a support (2) molded from plastic materials and provided with a parallelepiped structure having a longitudinal axis y-y, as well as comprising a front surface (2a), a rear surface (2b) and a flat head (2c); wherein said support (2) is suitable for being supported by said base (1) in an orthogonal position relative to said base (1) so as to act as a fixing and supporting point for said light loads;
system **characterized by** the fact that:
- said base (1) is provided at its first transverse edge (1a) with a through guide (G) developed in a direction orthogonal to that of said longitudinal axis x-x of said base (1);
- said support (2) is suitably shaped and dimensioned to be slidingly inserted into said through guide (G) provided in said base (1); wherein said support (2) is provided at different heights with multiple pairs of cylindrical through holes (21) arranged side by side orthogonally to the longitudinal axis y-y of said support (2); wherein said pairs of holes (21) are suitable for selectively accommodating a pair of screws (V1) suitable for engaging in said first transverse edge (1a) of the base (1) according to a direction parallel to said axis x-x of said base (1).

2. The system according to claim 1, wherein:
- said through guide (G) consists of a dovetail notch (10) provided at said first transverse edge (1a) of the base (1);
- said support (2) is provided in the center of said front surface (2a) with a longitudinal projection (20) having a dovetail section suitable for being slidingly inserted into said dovetail notch (10) of the base (1).

3. The system according to one of the preceding claims, wherein, starting from its front surface (1b), said base (1) is provided with two or more first through holes (1c) having an axis orthogonal to the axis x-x of said base (1) for the insertion of screws (V) suitable for fixing said base (1) to said masonry wall (PM)

4. The system according to one of the preceding claims, wherein said base (1) is provided with second holes (1d) for filling said base (1) with polyurethane foam.

5. The system according to one of the preceding claims, wherein said base (1) is internally provided with stiffening ribs (12).

6. The system according to one of the preceding claims, wherein said support (2) is provided at its front surface (2a) and at its sides with a first section (2') with continuous walls and with a second section (2") with alveolar structure defined by the intersections between longitudinal partitions (SL) and transverse partitions (ST); wherein said holes (21) ending on said front surface (2a) of the support (2) at said second section (2") with alveolar structure are disposed at the intersection points between said longitudinal partitions (SL) and said transverse partitions (ST).

7. The system according to one of the preceding claims, wherein said holes (21) of said support (2) are provided at the rear surface (2b) of said support (2) with an enlarged mouth (21a).

## Patentansprüche

1. Befestigungssystem für leichte Lasten auf Isolierplatten, die auf Gebäudeaußenwänden montiert sind, umfassend:
- eine Basis (1), die aus Kunststoff geformt ist und mit einer quaderförmigen Kastenstruktur versehen ist, die eine Längsachse x-x aufweist und dazu geeignet ist, an der Mauer (PM) eines Gebäudes befestigt zu werden;
- einen Träger (2), der aus Kunststoff geformt ist und mit einer quaderförmigen Kastenstruktur versehen ist, die eine Längsachse y-y aufweist und eine vordere Oberfläche (2a), eine hintere Oberfläche (2b) und einen flachen Kopf (2c) umfasst; wobei der Träger (2) dazu geeignet ist, von der Basis (1) in einer rechtwinkligen Position in Bezug auf die Basis (1) gehalten zu werden, um als Befestigungs- und Stützpunkt für die leichte Lasten zu dienen;
wobei das System **dadurch gekennzeichnet ist, dass**:
- die Basis (1) an ihrer ersten Querkante (1a) eine durchgehende Führung (G) aufweist, die sich in eine rechtwinklig zur Längsachse x-x der Basis (1) verlaufende Richtung erstreckt;
- wobei der Träger (2) eine derartige Form und Größe aufweist, dass er ins Innere der in der Basis (1) bereitgestellten durchgehenden Führung (G) gleitend eingeführt werden kann; wobei der Träger (2) auf unterschiedlichen Höhen mehrere Paare von zylindrischen Durchgangslöcher (21) aufweist, die rechtwinklig zur Längsachse y-y des Trägers (2) nebeneinander liegend angeordnet sind; wobei die Paare von Löchern (21) dazu geeignet sind, wahlweise ein Paar von Schrauben (V1) aufzunehmen, die dazu geeignet sind, an der ersten Querkante (1a) der Basis (1) in einer zur Achse x-x der Basis (1) parallelen Richtung einzugreifen.

2. System nach Anspruch 1, wobei:
- die Durchgangsführung (G) aus einer schwalbenschwanzförmigen Kerbe (10) besteht, die an der ersten Querkante (1a) der Basis (1) bereitgestellt ist;
- der Träger (2) im Mittelpunkt der vorderen Oberfläche (2a) einen längslaufenden Vorsprung (20) mit einem schwalbenschwanzförmigen Querschnitt aufweist, der dazu geeignet ist, ins Innere der schwalbenschwanzförmigen Kerbe (10) der Basis (1) gleitend eingeführt zu werden.

3. System nach einem der vorstehenden Ansprüche, wobei die Basis (1) ausgehend von ihrer vorderen Oberfläche (1b) zwei oder mehr erste Durchgangslöcher (1c) aufweist, deren Achse rechtwinklig zur Achse x-x der Basis (1) verläuft, zum Einstecken von Schrauben (V), die dazu geeignet sind, die Basis (1) an der Mauer (PM) zu befestigen

4. System nach einem der vorstehenden Ansprüche, wobei die Basis (1) zweite Löcher (1d) zum Füllen der Basis (1) mit Polyurethanschaum aufweist.

5. System nach einem der vorstehenden Ansprüche, wobei die Basis (1) innen mit Versteifungsrippen (12) versehen ist.

6. System nach einem der vorstehenden Ansprüche, wobei der Träger (2) an seiner vorderen Oberfläche (2a) und an seinen Seiten einen ersten Abschnitt (2') mit durchgehenden Wänden und einen zweiten Abschnitt (2") mit einer wabenförmigen Struktur aufweist, die durch die Überschneidungen von längslaufenden Zwischenwänden (SL) mit querlaufenden Zwischenwänden (ST) definiert wird; wobei die Löcher (21), die auf der vorderen Oberfläche (2a) des Trägers (2) an dem zweiten Abschnitt (2") mit wabenförmiger Struktur austreten, an den Überschneidungspunkten der längslaufenden Zwischenwände (SL) mit den querlaufenden Zwischenwänden angeordnet sind.

7. System nach einem der vorstehenden Ansprüche, wobei die Löcher (21) des Trägers (2) an der hinteren Oberfläche (2b) des Trägers (2) mit einer vergrößerten Öffnung (21a) versehen sind.

## Revendications

1. Système de fixation de charges légères sur des panneaux de revêtement isolants montés sur les parois externes des bâtiments, comprenant :
- une base (1) imprimée en matériaux plastiques, dotée d'une structure boitier de forme parallélépipède ayant un axe longitudinal x-x, apte à être fixée à la paroi en maçonnerie (PM) d'un bâtiment ;
- un support (2) imprimé en matériaux plastiques, doté d'une structure de forme parallélépipède ayant un axe longitudinal y-y, comprenant également une surface antérieure (2a), une surface postérieure (2b) et une tête plate (2c) ; où ledit support (2) est apte à être soutenu par la susdite base (1) en position orthogonale à la base même (1) pour fonctionner en tant que point de fixation et soutien pour les susdites charges légères ;
système **caractérisé en ce que** :
- la susdite base (1) présente, en correspondance de son premier bord transversal (1a), un guide passant (G) développé en direction orthogonale par rapport à celle du susdit axe longitudinal x-x de ladite base (1) ;
- ledit support (2) adopte une forme et des dimensions telles à pouvoir s'enfiler de manière coulissante à l'intérieur du susdit guide passant (G) dont est dotée la susdite base (1) ; où ledit support (2) présente, sur des cotes différentes, plusieurs paires d'orifices cylindriques passants juxtaposés (21) disposés orthogonalement à l'axe longitudinal y-y du susdit support (2) ; où lesdites paires d'orifices (21) sont aptes à loger sélectivement une paire de vis (V1) aptes à s'engager en correspondance du susdit premier bord transversal (1a) de la base (1) selon une direction parallèle au susdit axe x-x de ladite base (1).

2. Système selon la revendication 1, où :
- le susdit guide passant (G) consiste en une entaille en queue d'aronde (10) prévue en correspondance du susdit premier bord transversal (1a) de la base (1) ;
- le susdit support (2) présente, au centre de la susdite surface antérieure (2a), une saille longitudinale (20) ayant une section en queue d'aronde apte à s'enfiler de manière coulissante à l'intérieur de la susdite entaille en queue d'aronde (10) de la base (1).

3. Système selon l'une des revendications précédentes, où la susdite base (1) présente, à partir de sa propre surface frontale (1b), deux ou plus premiers orifices passants (1c), ayant un axe orthogonal à l'axe x-x de ladite base (1), pour la mise en œuvre de vis (V) destinées à la fixation de ladite base (1) à la susdite paroi en maçonnerie (PM).

4. Système selon l'une des revendications précédentes, où la susdite base (1) présente des deuxièmes orifices (1d) pour le remplissage de ladite base (1) avec de la mousse de polyuréthane.

5. Système selon l'une des revendications précédentes, où la susdite base (1) adopte à l'intérieur des nervures de raidissement (12).

6. Système selon l'une des revendications précédentes, où le susdit support (2) présente, en correspondance de sa propre surface antérieure (2a) et de ses propres côtés, un premier segment (2') doté de parois continues et un second segment (2") doté d'une structure alvéolaire définie par les intersections de séparations longitudinales (SL) et séparations transversales (ST) ; où les susdits orifices (21) qui débouchent sur la susdite surface antérieure (2a) du support (2), en correspondance du susdit second segment (2") doté d'une structure alvéolaire, sont aménagés en correspondance des points d'intersection entre les susdites séparations longitudinales (SL) et les susdites séparations transversales (ST).

7. Système selon l'une des revendications précédentes, où les susdits orifices (21) du susdit support (2) présentent, en correspondance de la surface postérieure (2b) du susdit support (2), une embouchure élargie (21a).
